# EUROPÄISCHE PATENTSCHRIFT

(11) **EP 3 941 801 B1**
(45) Veröffentlichungstag und Bekanntmachung des Hinweises auf die Patenterteilung: **20.03.2024**
(21) Anmeldenummer: 20702781.4
(22) Anmeldetag: 30.01.2020
(51) Int. Cl.: B62D 5/06, B62D 5/24, B62D 5/065

(54) **LENKUNTERSTÜTZUNGSVORRICHTUNG FÜR EIN FAHRZEUG**
POWER STEERING MECHANISM FOR A VEHICLE
DISPOSITIF DE DIRECTION ASSISTÉE POUR VÉHICULE

(30) Priorität: 18.03.2019 DE 202019101522 U
(43) Veröffentlichungstag der Anmeldung: 26.01.2022
(73) Patentinhaber: KNORR-BREMSE Systeme für Nutzfahrzeuge GmbH, 80809 München (DE)
(72) Erfinder: LANG, Rainer, 73525 Schwäbisch Gmünd (DE); MILLER, Bernhard, 71263 Weil der Stadt (DE); PETERREINS, Klaus, 70794 Filderstadt (DE); HECKER, Falk, 71706 Markgröningen (DE)
(86) Internationale Anmeldenummer: PCT/EP2020/052205
(87) Internationale Veröffentlichungsnummer: WO 2020/187476

(56) Entgegenhaltungen:
- WO-A1-02/28673
- DE-A1- 19 829 531
- DE-A1-102014 117 301
- DE-A1-102015 222 864

## Beschreibung

Die vorliegende Erfindung bezieht sich auf eine Lenkunterstützungsvorrichtung für ein Fahrzeug, insbesondere für ein Nutzkraftfahrzeug.

Bei Lenksystemen von Fahrzeugen, insbesondere bei Vorderachslenksystemen, auch Hilfskraftlenkung genannt, von mittleren und schweren Nutzkraftwagen, kann zum Beispiel ein Kugelaumlauf-Lenkgetriebe durch eine externe, unidirektionale hydraulische Pumpe, meist eine Flügelzellenpumpe, betrieben werden. Eine Verbindung zwischen Pumpe und Lenkgetriebe kann beispielsweise durch eine externe Verrohrung erfolgen. Zusätzlich kann ein externes Ölreservoir als Ausgleichsbehälter erfoderlich sein. Somit können einzelne Komponenten eines solchen Lenksystems im Fahrzeug verteilt angeordnet sein.

Die DE 10 2014 117 301 A1 offenbart ein Lenksystem für ein Kraftfahrzeug mit einer von einem Elektromotor angetriebenen Hydraulikpumpe, einem in einem Lenkgetriebegehäuse angeordneten Arbeitszylinder und einem mit der Hydraulikpumpe und dem Arbeitszylinder verbundenen Ölbehälter zum Volumenausgleich des Arbeitszylinders, wobei die Hydraulikpumpe, der die Hydraulikpumpe antreibende Elektromotor und der mit der Hydraulikpumpe und dem Arbeitszylinder verbundene Ölbehälter in oder an dem Lenkgetriebegehäuse angeordnet sind. In der DE 10 2015 222 864 A1 ist ein Servosystem für ein hydraulisches Lenksystem für ein Fahrzeug beschrieben. Die DE 198 29 531 A1 zeigt eine Hilfskraftlenkung mit hydraulischer Hilfskraftunterstützung für Kraftfahrzeuge. In der WO 02/28673 A1 ist ein integriertes elektrisch-hydraulisches Servolenkungssystem dargestellt.

Vor diesem Hintergrund ist es die Aufgabe der vorliegenden Erfindung, eine verbesserte Lenkunterstützungsvorrichtung für ein Fahrzeug zu schaffen.

Diese Aufgabe wird durch eine Lenkunterstützungsvorrichtung für ein Fahrzeug gemäß dem Hauptanspruch gelöst.

Es wird eine Lenkunterstützungsvorrichtung für ein Fahrzeug vorgestellt, wobei die Lenkunterstützungsvorrichtung folgende Merkmale aufweist:
- eine Eingangswelle zum Einleiten eines Drehmoments von einer Lenksäule des Fahrzeugs in die Lenkunterstützungsvorrichtung;
- einen Drehmomentsensor, wobei der Drehmomentsensor ausgebildet ist, um das über die Eingangswelle eingeleitete Drehmoment zu erfassen und ein Sensorsignal bereitzustellen, welches das erfasste Drehmoment repräsentiert;
- eine Ausgangswelle zum Ausleiten des Drehmoments aus der Lenkunterstützungsvorrichtung;
- eine Getriebeeinheit, wobei die Getriebeeinheit ausgebildet ist, um das Drehmoment von der Eingangswelle mechanisch auf die Ausgangswelle zu übertragen, wobei die Getriebeeinheit innerhalb eines Lenkgehäuses angeordnet ist; und
- eine Antriebseinheit, wobei die Antriebseinheit ausgebildet ist, um abhängig von dem Sensorsignal die Getriebeeinheit mit einem hydraulischen Arbeitsmedium zu beaufschlagen, wobei die Antriebseinheit und der Drehmomentsensor in mechanischem Kontakt mit dem Lenkgehäuse angeordnet sind,
- wobei die Antriebseinheit eine Pumpe zum Fördern des Arbeitsmediums und einen Motor zum Antreiben der Pumpe aufweist,
- wobei die Antriebseinheit ein Reservoir zum Beinhalten von Arbeitsmedium aufweist,
- wobei zumindest die Pumpe innerhalb des Reservoirs angeordnet ist,
- wobei die Eingangswelle, der Drehmomentsensor, die Getriebeeinheit und die Antriebseinheit entlang einer Längsachse (L) der Lenkunterstützungsvorrichtung aufgereiht angeordnet sind.

Bei dem Fahrzeug kann es sich um ein Nutzfahrzeug bzw. einen Nutzkraftwagen handeln, wie beispielsweise einen Lastkraftwagen oder dergleichen. Die Lenkunterstützungsvorrichtung kann Teil eines Lenksystems des Fahrzeugs sein. Das Lenksystem kann die Lenksäule aufweisen. Bei dem Lenksystem kann es sich um ein aktives hydraulisches Vorderachslenksystem für Nutzkraftfahrzeuge handeln. Die Lenkunterstützungsvorrichtung kann ausgebildet sein, um Lenkvorgänge für eine Achse des Fahrzeugs zu unterstützen. Die Lenkunterstützungsvorrichtung kann ausgebildet sein, um eine hydraulisch unterstützte Umsetzung einer Lenkanforderung von einem Fahrer des Fahrzeugs in Lenkbewegungen einer Achse bzw. von Rädern des Fahrzeugs zu ermöglichen. Die Antriebseinheit kann direkt an dem Lenkgehäuse angeordnet oder angebracht sein. Der Drehmomentsensor kann direkt an dem Lenkgehäuse angeordnet oder angebracht sein. Bei dem Arbeitsmedium kann es sich um Hydrauliköl oder dergleichen handeln.

Gemäß Ausführungsformen kann insbesondere eine hochintegrierte Anordnung bzw. Konstruktion einer Lenkunterstützungsvorrichtung für ein aktives hydraulisches Vorderachslenksystem für Nutzkraftfahrzeuge bzw. für eine aktive Vorderachslenkung für mittlere und schwere Nutzfahrzeuge bereitgestellt werden. Dazu kann die Lenkunterstützungsvorrichtung beispielsweise anstelle eines Ventils, insbesondere eines Drehschieberventils, einen Drehmomentsensor aufweisen und können die Komponenten der Lenkunterstützungsvorrichtung als eine einzige, integrierte, komplette Baugruppe angeordnet sein. Die Lenkunterstützungsvorrichtung kann ein hochintegriertes aktives Vorderachslenksystem bzw. eine hochintegrierte aktive Hilfskraftlenkung insbesondere für mittlere und schwere Nutzkraftwagen ermöglichen. So kann beispielsweise eine Anordung eines hochintegrierten aktiven Lenksystems bzw. einer aktiven Hilfskraftlenkung unter Beibehaltung einer mechanischen Technologie eines hydraulischen Kugelaumlauf-Lenkgetriebes realisiert werden.

Vorteilhafterweise kann gemäß Ausführungsformen insbesondere ein benötigter Bauraum für eine Lenkunterstützungsvorrichtung verringert werden und kann Lenkunterstützungsvorrichtung als eine komplette, kompakte und hochintegrierte Baugruppe ohne externe Rohre oder Leitungen zwischen Getriebeeinheit und Antriebseinheit bereitgestellt werden. Somit kann anstelle einer verteilten Anordnung von Komponenten eine konzentrierte, kompakte Anordnung der Lenkunterstützungsvorrichtung in einem Nutzkraftwagen erreicht werden. Durch die integrierte Anordnung können Kosteneinsparungen durch eine verringerte Anzahl von einzelnen Komponenten oder Baugruppen sowie einen reduzierten Installationsaufwand, eine gesenkte Fehleranfälligkeit, eine Befüllung mit Arbeitsmedium, Druckprüfung und Inbetriebnahme vorteilhaft im Rahmen der Herstellung sowie einen Raumgewinn im Fahrzeug erreicht werden. Auch hierbei kann eine verteilte Anordung von Komponenten, wie beispielsweise Pumpe, Reservoir, Getriebeeinheit, Verrohrung und dergleichen, zugunsten einer hochintegrierten, konzentrierten Anordnung vermieden werden.

Somit kann beispielsweise einem Kunden ein vollständig befülltes und getestetes Lenksystem bzw. eine vollständig befüllte und getestete Lenkunterstützungsvorrichtung zur Verfügung gestellt werden, welche per "plug&play" bzw. einfach und unkompliziert in das Fahrzeug montiert werden kann. Hierbei können hinsichtlich der Lenkunterstützungsvorrichtung eine Verringerung einer Komponentenanzahl und damit auch eine Verringerung eines Raumbedarfs, einer Fehleranfälligkeit sowie eines Installationsaufwands erreicht werden. Hierbei kann ein herkömmliches Kugelumlauf-Lenkgetriebe konstruktiv weitgehend bestehen bleiben und kann die Antriebseinheit zusätzlich mit in ein Gehäuse integriert werden. Als vorteilhafter Nebeneffekt kann eine Kraftstoffeinsparung erreicht werden, beispielsweise bis zu 0,5 Liter pro 100 Kilometer.

Gemäß einer Ausführungsform können zumindest die Getriebeeinheit und die Antriebseinheit innerhalb eines gemeinsamen Gehäuses angeordnet sein. Das gemeinsame Gehäuse kann das Lenkgehäuse oder ein anderes Gehäuse sein. Eine solche Ausführungsform bietet den Vorteil, dass eine kompakte, platzsparende und hochintegrierte Bauform der Lenkunterstützungsvorrichtung erreicht werden kann.

Erfindundsgemäß weist die Antriebseinheit eine Pumpe zum Fördern des Arbeitsmediums und einen Motor zum Antreiben der Pumpe auf. Bei dem Motor kann es sich um einen Elektromotor handeln. Eine solche Ausführungsform bietet den Vorteil, dass die Antriebseinheit und somit auch die Lenkunterstützungsvorrichtung zumindest teilweise autark (als Steer-by-wire-system oder im Rahmen des Autonomen Fahrens/DAS) betrieben werden kann.

Erfindungsgemäß weist die Antriebseinheit ein Reservoir zum Beinhalten von Arbeitsmedium auf. Hierbei ist zumindest die Pumpe innerhalb des Reservoirs angeordnet.

Das Reservoir kann eine von einem Gehäuse umschlossene Kammer zum beinhalten von Hydrauliköl oder einem anderen Arbeitsmedium aufweisen. Das Reservoir kann als ein Ausgleichsbehälter für Arbeitsmedium fungieren. Eine solche Ausführungsform bietet den Vorteil, dass die Antriebseinheit besonders platzsparend und kompakt realisiert werden kann. Hierbei können insbesondere extern verlaufende Fluidleitungen zwischen dem Reservoir und der Pumpe werden.

Ferner kann dabei die Pumpe eine bidirektionale Pumpe sein, insbesondere eine Innenzahnradpumpe oder eine Sichelpumpe. Anders ausgedrückt kann die Pumpe in zwei Richtungen betrieben werden, um das Arbeitsmedium in zwei unterschiedliche Richtungen oder Kavitäten zu fördern. Eine solche Ausführungsform bietet den Vorteil, dass die Antriebseinheit und die Getriebeeinheit konstruktiv einfach und zuverlässig ausgeführt werden können.

Gemäß einer Ausführungsform kann die Getriebeeinheit zwischen dem Drehmomentsensor und der Antriebseinheit angeordnet sein. Alternativ kann die Antriebseinheit zwischen dem Drehmomentsensor und der Getriebeeinheit angeordnet sein. Eine solche Ausführungsform bietet den Vorteil, dass ein in den meisten Fahrzeugen ohnehin verfügbarer Bauraum ausgenutzt werden kann. Es kann somit aber auch je nach Art des Fahrzeugs eine am besten geeignete Anordnung bzw. Abfolge der Einheiten gewählt werden.

Zudem kann die Lenkunterstützungsvorrichtung eine Elektronikeinheit zum Steuern der Antriebseinheit abhängig von dem Sensorsignal aufweisen. Hierbei kann die Elektronikeinheit in mechanischem Kontakt mit der Antriebseinheit angeordnet sein. Die Elektronikeinheit kann signalübertragungsfähig mit dem Motor der Antriebseinheit verbunden sein. Eine solche Ausführungsform bietet den Vorteil, dass die Möglichkeit einer aktiven Ansteuerung von außen und somit ein Einsatz für DAS/ADAS-Funktionalitäten, autonomes Fahren oder Elektromobilität ohne weitere konstruktive Maßnahmen geschaffen werden kann. Insbesondere kann eine Ansteuerung einer hydraulischen Lenkung über ein zentrales Steuergerät beispielsweise für DAS/ADAS-Funktionalitäten (DAS = Driver Assistance Systems, Fahrerassistenzsysteme; ADAS = Advanced Driver Assistance Systems, hochentwickelte Fahrerassistenzsysteme) oder autonomes Fahren ermöglicht werden. Dies kann ohne weitere Zusätze oder technische Änderungen, wie beispielsweise zusätzliche Steuereinheit oder zusätzlichen Antriebsmotor im Bereich der Lenksäule bzw. am Eingangswellenbereich, kostengünstig und zuverlässig realisiert werden.

Dabei kann die Elektronikeinheit bezüglich der Antriebseinheit quer zu einer Längsachse der Lenkunterstützungsvorrichtung versetzt an der Antriebseinheit angeordnet sein. Anders ausgedrückt kann die Elektronikeinheit bilateral an der Antriebseinheit angeordnet oder angebracht sein. Eine solche Ausführungsform bietet den Vorteil, dass für die Lenkunterstützungsvorrichtung benötigter Bauraum verringert werden kann. Alternativ kann die Antriebseinheit zwischen der Elektronikeinheit und der Getriebeeinheit angeordnet sein. Hierbei können die Elektronikeinheit, die Antriebseinheit und die Getriebeeinheit entlang der Längsachse der Lenkunterstützungsvorrichtung aufgereiht angeordnet sein. Eine solche Ausführungsform bietet den Vorteil, dass eine Leitungsführung von Motorphasen und Sensorleitungen, beispielsweise zur Erfassung von Motorposition, Temperatur, Druck etc., vereinfacht werden kann.

Auch kann die Getriebeeinheit einen fluidisch mit der Antriebseinheit verbundenen ersten Arbeitsraum zum Beinhalten von Arbeitsmedium und einen fluidisch mit der Antriebseinheit verbundenen zweiten Arbeitsraum zum Beinhalten von Arbeitsmedium aufweisen. Hierbei kann der erste Arbeitsraum über eine erste Fluidleitung mit der Antriebseinheit verbunden sein und kann der zweite Arbeitsraum über eine zweite Fluidleitung mit der Antriebseinheit verbunden sein. Wenn mittels der Antriebseinheit der erste Arbeitsraum mit Arbeitsmedium beaufschlagt wird, kann eine Bewegung der Getriebeeinheit in eine erste Richtung bewirkt oder unterstützt werden. Wenn mittels der Antriebseinheit der zweite Arbeitsraum mit Arbeitsmedium beaufschlagt wird, kann eine Bewegung der Getriebeeinheit in eine zweite Richtung bewirkt oder unterstützt werden. Eine solche Ausführungsform bietet den Vorteil, dass ein einfacher und zuverlässiger Aufbau und Betrieb der Getriebeeinheit realisiert werden kann.

Ferner kann die Getriebeeinheit als ein Kugelgewindetrieb ausgeführt sein. Hierbei kann die Getriebeeinheit einen Kolben mit integriertem Kugelumlauf und eine Spindel aufweisen. Die Spindel kann über den Drehmomentsensor mit der Eingangswelle verbunden sein. Der Kolben kann durch Arbeitsmedium in dem ersten Arbeitsraum oder in dem zweiten Arbeitsraum bewegbar sein. Eine solche Ausführungsform bietet den Vorteil, dass eine solche Getriebeeinheit eine verringerte Reibung, einen verringerten Haftgleiteffekt sowie einen geringeren Verschleiß aufweist.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines hydraulischen Vorderachslenksystems für Nutzkraftfahrzeuge;
Fig. 2 eine schematische Darstellung eines Fahrzeugs mit einem Lenksystem mit einer Lenkunterstützungsvorrichtung gemäß einem Ausführungsbeispiel;
Fig. 3 eine schematische Darstellung einer Lenkunterstützungsvorrichtung gemäß einem Ausführungsbeispiel;
Fig. 4 eine schematische Darstellung einer Lenkunterstützungsvorrichtung gemäß einem Ausführungsbeispiel;
Fig. 5 eine schematische Darstellung einer Lenkunterstützungsvorrichtung gemäß einem Ausführungsbeispiel; und
Fig. 6 eine schematische Darstellung einer Lenkunterstützungsvorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

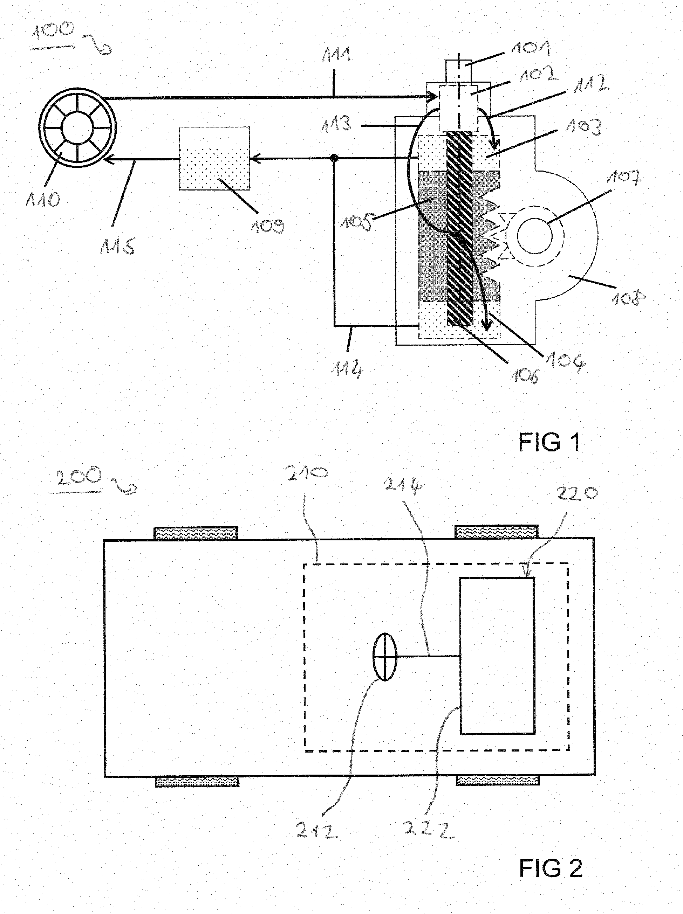

**Fig. 1** zeigt eine schematische Darstellung eines hydraulischen Vorderachslenksystems 100 für Nutzkraftfahrzeuge. Das Vorderachslenksystem 100 umfasst eine über eine Lenksäule mit einem Lenkrad verbundene Eingangswelle 101, ein Drehschieberventil 102 mit integriertem Drehstab, einen oberen Arbeitsraum 103 bzw. oberen Zylinderraum 103, einen unteren Arbeitsraum 104 bzw. unteren Zylinderraum 104, einen zwischen dem oberen Arbeitsraum 103 und dem unteren Arbeitsraum 104 angeordneten Kolben 105, eine spanisch mit der Eingangswelle 101 über das Drehschieberventil 102 verbundene Spindel 106, eine Ausgangswelle 107 bzw. Segmentwelle 107, ein Lenkgehäuse 108, ein Ölreservoir 109, eine unidirektionale Pumpe 110, beispielsweise eine Flügelzellenpumpe, passiv oder aktiv angetrieben durch einen Motor, eine erste Hochdruckleitung 111 in Gestalt einer Verrohrung von der Pumpe 110 zu dem Drehschieberventil 102 bzw. Lenkventil, eine zweite Hochdruckleitung 112 von dem Drehschieberventil 102 in den oberen Arbeitsraum 103, eine dritte Hochdruckleitung 113 von dem Drehschieberventil 102 in den unteren Arbeitsraum 104, eine erste Niederdruckleitung 114 in Gestalt einer Verrohrung von den Arbeitsräumen 103 und 104 in das Ölreservoir 109 und eine zweite Niederdruckleitung 115 von dem Ölreservoir 109 zu einem Ensemblebereich der Pumpe 110.

Üblicherweise wird die Pumpe 110 von einem Verbrennungsmotor angetrieben und ist an demselben angeflanscht, wobei die Lenkung meist am Rahmen unter dem Fahrer sitzt, wobei das Ölreservoir 109 bzw. ein Ausgleichsbehälter irgendwo dazwischen angeordnet ist, und wobei eine Verbindung Verbindung der Komponenten über eine Verrohrung erfolgt.

**Fig. 2** zeigt eine schematische Darstellung eines Fahrzeugs 200 mit einem Lenksystem 210 mit einer Lenkunterstützungsvorrichtung 220 gemäß einem Ausführungsbeispiel. Das Lenksystem 110 ist in dem Fahrzeug 200 angeordnet. Bei dem Fahrzeug handelt es sich beispielsweise um ein Nutzfahrzeug bzw. einen Nutzkraftwagen, insbesondere um ein mittleres oder schweres Nutzfahrzeug, zum Beispiel einen Lastkraftwagen oder dergleichen. Das Lenksystem 110 kann als ein Lenksystem für eine Vorderachse des Fahrzeugs 200 ausgeführt sein. So kann das Lenksystem 110 auch als ein Vorderachslenksystem 110 bezeichnet werden.

Das Lenksystem 110 weist gemäß dem hier dargestellten Ausführungsbeispiel ein Lenkrad 212, eine Lenksäule 214 und die Lenkunterstützungsvorrichtung 220 auf. Über die Lenksäule 214 ist das Lenkrad 212 mechanisch mit der Lenkunterstützungsvorrichtung 220 gekoppelt. Die Lenkunterstützungsvorrichtung 220 weist ein Gehäuse 222 auf. Gemäß dem hier dargestellten Ausführungsbeispiel sind Komponenten der Lenkunterstützungsvorrichtung 220 innerhalb des Gehäuses 222 angeordnet. Genauer gesagt erstrecken sich lediglich eine Eingangswelle und/oder eine Ausgangswelle der Lenkunterstützungsvorrichtung 220 aus dem Gehäuse 222 heraus. Die Lenkunterstützungsvorrichtung 220 wird unter Bezugnahme auf nachfolgende Figuren detaillierter erläutert.

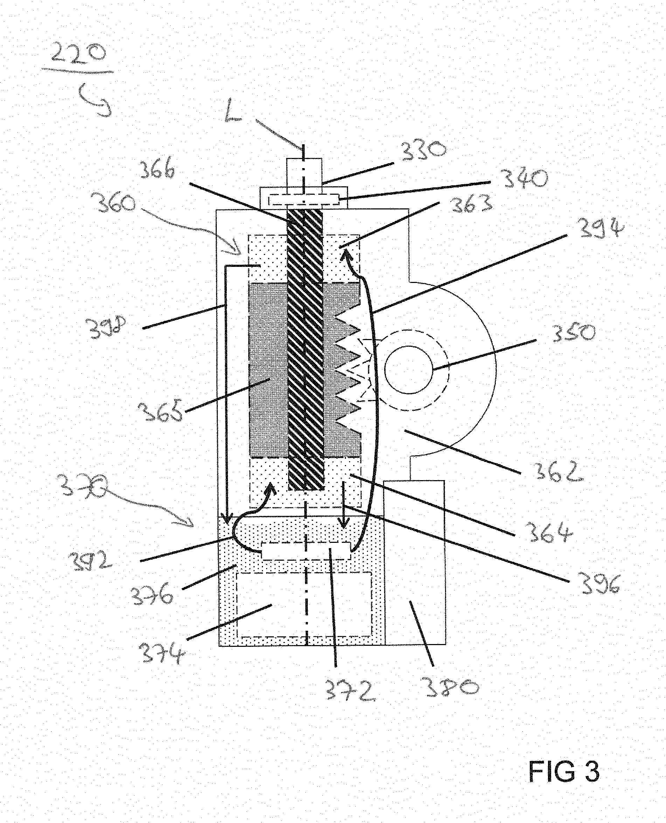

**Fig. 3** zeigt eine schematische Darstellung einer Lenkunterstützungsvorrichtung 220 gemäß einem Ausführungsbeispiel. Die Lenkunterstützungsvorrichtung 220 entspricht oder ähnelt hierbei der Lenkunterstützungsvorrichtung aus Fig. 2. Die Lenkunterstützungsvorrichtung 220 weist eine Eingangswelle 330, einen Drehmomentsensor 340, eine Ausgangswelle 350, eine Getriebeeinheit 360 und eine Antriebseinheit 370 auf.

Die Eingangswelle 330 ist ausgebildet, um ein Drehmoment von einer Lenksäule des Fahrzeugs, mit welcher die Eingangswelle 330 verbindbar oder verbunden ist, in die Lenkunterstützungsvorrichtung 220 einzuleiten. Das über die Eingangswelle 330 eingeleitete Drehmoment kann auch als ein Eingangsdrehmoment bezeichnet werden. Die Eingangswelle 330 ist über die Lenksäule des Lenksystems mit dem Lenkrad verbunden bzw. mechanisch gekoppelt. Der Drehmomentsensor 340 ist ausgebildet, um das über die Eingangswelle 330 eingeleitete Drehmoment zu erfassen. Ferner ist der Drehmomentsensor 340 ausgebildet, um ein Sensorsignal bereitzustellen, welches das erfasste Drehmoment repräsentiert. Die Ausgangswelle 350 ist ausgebildet, um das Drehmoment aus der Lenkunterstützungsvorrichtung 220 auszuleiten bzw. um das Drehmoment an eine Achse bzw. an Räder des Fahrzeugs auszugeben. Das über die Ausgangswelle 350 ausgeleitete Drehmoment kann auch als ein Ausgangsdrehmoment oder eine Ausgangskraft bezeichnet werden.

Die Getriebeeinheit 360 ist ausgebildet, um das Drehmoment von der Eingangswelle 330 mechanisch auf die Ausgangswelle 350 zu übertragen. Insbesondere ist die Getriebeeinheit 360 ausgebildet, um das Eingangsdrehmoment in das Ausgangsdrehmoment umzusetzen. Die Getriebeeinheit 360 weist ein Lenkgehäuse 362 auf. Die Getriebeeinheit 360 ist innerhalb des Lenkgehäuses 362 angeordnet. Die Antriebseinheit 370 ist ausgebildet, um abhängig von dem Sensorsignal des Drehmomentsensors 340 die Getriebeeinheit 360 mit einem hydraulischen Arbeitsmedium zu beaufschlagen. Anders ausgedrückt ist die Antriebseinheit 370 ausgebildet, um abhängig von dem Sensorsignal des Drehmomentsensors 340 eine Bewegung der Getriebeeinheit 360 bzw. eine Bewegung innerhalb der Getriebeeinheit 360 mittels des Arbeitsmediums zu unterstützen bzw. zu verstärken.

Die Antriebseinheit 370 und der Drehmomentsensor 340 sind in mechanischem Kontakt mit dem Lenkgehäuse 362 angeordnet. Genauer gesagt sind die Antriebseinheit 370 und der Drehmomentsensor 340 direkt an dem Lenkgehäuse 362 angeflanscht oder anderweitig angebracht. Auch sind zusätzlich oder alternativ die Antriebseinheit 370 und der Drehmomentsensor 340 innerhalb des Lenkgehäuses 362 angeordnet. Allgemein ausgedrückt sind zumindest die Getriebeeinheit 360 und die Antriebseinheit 370 innerhalb eines gemeinsamen Gehäuses angeordnet. Optional ist auch der Drehmomentsensor 340 innerhalb des gemeinsamen Gehäuses angeordnet. Bei dem gemeinsamen Gehäuse handelt es sich beispielsweise um das Lenkgehäuse 362.

Gemäß dem hier dargestellten Ausführungsbeispiel ist die Getriebeeinheit 360 als ein Kugelgewindetrieb ausgeführt. Dabei weist die Getriebeeinheit 360 einen fluidisch mit der Antriebseinheit 370 verbundenen ersten Arbeitsraum 363 zum Beinhalten von Arbeitsmedium, einen fluidisch mit der Antriebseinheit 370 verbundenen zweiten Arbeitsraum 364 zum Beinhalten von Arbeitsmedium, einen Kolben 365 mit integriertem Kugelumlauf und eine Spindel 366 auf, die über den Drehmomentsensor 340 mechanisch mit der Eingangswelle 330 verbunden ist.

Gemäß dem hier dargestellten Ausführungsbeispiel weist die Antriebseinheit 370 eine Pumpe 372 zum Fördern des Arbeitsmediums und einen Motor 374 zum Antreiben der Pumpe 372 auf. Bei dem Motor 374 handelt es sich um einen Elektromotor. Die Pumpe 372 ist als eine bidirektionale Pumpe ausgeführt. Beispielsweise handelt es sich bei der Pumpe 372 um eine Innenzahnradpumpe, eine Sichelpumpe oder dergleichen. Ferner weist die Antriebseinheit 370 ein Reservoir 376 zum Beinhalten von Arbeitsmedium auf. Zumindest die Pumpe 372 ist innerhalb des Reservoirs 376 angeordnet. Gemäß dem hier dargestellten Ausführungsbeispiel sind die Pumpe 372 und der Motor 374 innerhalb des Reservoirs 376 angeordnet.

Die Lenkunterstützungsvorrichtung 220 weist gemäß dem hier dargestellten Ausführungsbeispiel auch eine Elektronikeinheit 380 bzw. Steuereinheit 380 auf. Die Elektronikeinheit 380 ist in mechanischem Kontakt mit der Antriebseinheit 370 angeordnet. Dabei ist die Elektronikeinheit 380 direkt an der Antriebseinheit 370 angeflanscht oder anderweitig angebracht. Die Elektronikeinheit 380 ist ausgebildet, um die Antriebseinheit 370 abhängig von dem Sensorsignal des Drehmomentsensors 340 zu steuern. Genauer gesagt ist die Elektronikeinheit 380 ausgebildet, um den Motor 374 der Antriebseinheit 370 abhängig von dem Sensorsignal zu steuern. Bei der Elektronikeinheit 380 handelt es sich um einen Mikrocontroller, ein sogenanntes Logic-Board oder dergleichen. Die Elektronikeinheit 380 kann auch eine Endstufe für eine Motoransteuerung repräsentieren.

Bezüglich der Lenkunterstützungsvorrichtung 220 ist in Fig. 3 auch eine Längsachse L eingezeichnet. Die Eingangswelle 330, die Spindel 366 sowie der Kolben 365 erstrecken sich entlang der Längsachse L. Gemäß dem hier dargestellten Ausführungsbeispiel ist die Getriebeeinheit 360 zwischen dem Drehmomentsensor 340 und der Antriebseinheit 370 angeordnet. Hierbei sind die Eingangswelle 330, der Drehmomentsensor 340, die Getriebeeinheit 360 und die Antriebseinheit 370 entlang der Längsachse L aufgereiht angeordnet. Die Elektronikeinheit 380 ist bezüglich der Antriebseinheit 370 quer zu der Längsachse L versetzt an der Antriebseinheit 370 angeordnet. Die Ausgangswelle 350 ist relativ zu dem Kolben 365 und der Spindel 366 quer zu der Längsachse L versetzt angeordnet. Dabei ist die Elektronikeinheit 380 in dieselbe Richtung wie die Ausgangswelle 350 quer zu der Längsachse L versetzt.

Die Pumpe 372 der Antriebseinheit 370 ist über eine erste Hochdruckleitung 392 mit dem zweiten Arbeitsraum 364 der Getriebeeinheit 360 fluidisch verbunden. Ferner ist die Pumpe 372 über eine zweite Hochdruckleitung 394 fluidisch mit dem ersten Arbeitsraum 363 der Getriebeeinheit 360 verbunden. Der zweite Arbeitsraum 364 der Getriebeeinheit 360 ist über eine erste Niederdruckleitung 396 fluidisch mit dem Reservoir 376 verbunden. Der erste Arbeitsraum 363 der Getriebeeinheit 360 ist über eine zweite Niederdruckleitung 398 fluidisch mit dem Reservoir 376 verbunden. Die Hochdruckleitungen 392 und 394 sowie die Niederdruckleitungen 396 und 398 verlaufen intern innerhalb der Lenkunterstützungsvorrichtung 220. Die Pumpe 372 ist fluidisch mit dem Reservoir 376 verbunden.

Die Antriebseinheit 370 oder auch ein sogenanntes Powerpack, einschließlich der Pumpe 372, des Motors 374 und der Elektronikeinheit 380, ist in dem Fahrzeug im Bereich eines Lenkstockhebels verbaut. In diesem Bereich besteht in den meisten Fahrzeugen Bauraum zur Verfügung. Die Eingangswelle 330 ist verglichen mit herkömmlichen Lenksystemen nicht oder nur geringfügig verlängert, sodass ein bislang benötigter Bauraum eines Lenkgetriebes nicht oder nur unwesentlich erweitert zu werden braucht. Durch seitliche Anordung der Elektronikeinheit 380 wird eine kurze Baulänge erreicht und somit eine einfache Austauschbarkeit bezüglich herkömmlichen Komponenten erreicht. Gemäß einem anderen Ausführungsbeispiel kann die Elektronikeinheit 380 auch in eine andere Richtung als die Ausgangswelle 350 quer zu der Längsachse L versetzt sein.

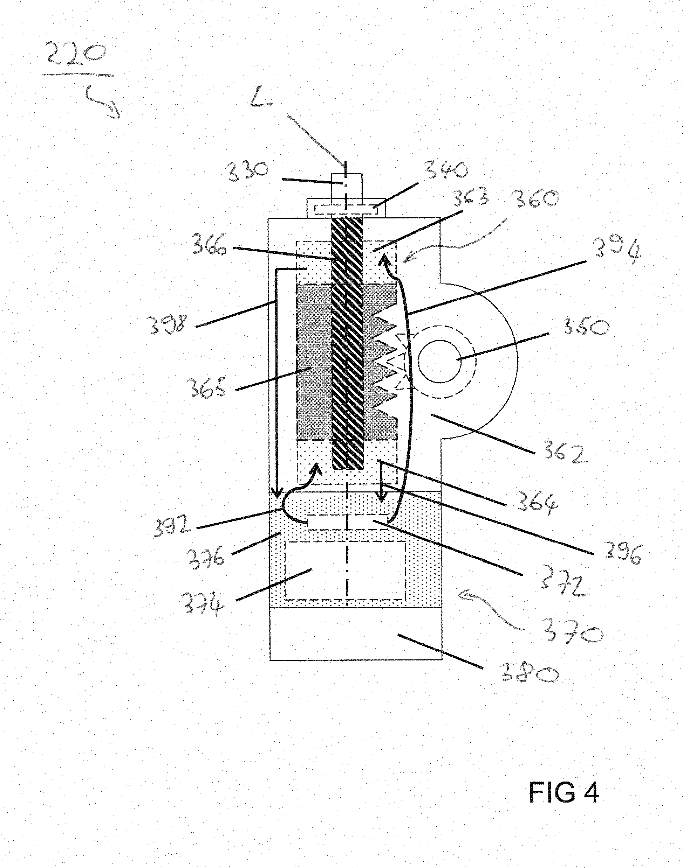

**Fig. 4** zeigt eine schematische Darstellung einer Lenkunterstützungsvorrichtung 220 gemäß einem Ausführungsbeispiel. Die Lenkunterstützungsvorrichtung 220 entspricht der Lenkunterstützungsvorrichtung aus Fig. 3 mit Ausnahme dessen, dass die Antriebseinheit 370 zwischen der Elektronikeinheit 380 und der Getriebeeinheit 360 angeordnet ist bzw. die Elektronikeinheit 380 bezüglich der Längsachse L axial in Verlängerung der Antriebseinheit 370 angeordnet ist.

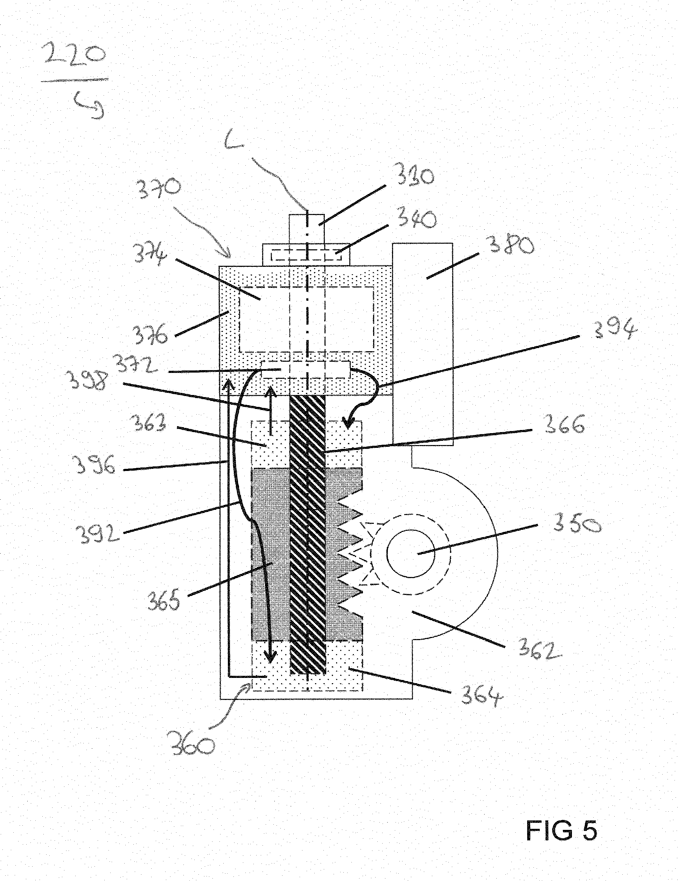

**Fig. 5** zeigt eine schematische Darstellung einer Lenkunterstützungsvorrichtung 220 gemäß einem Ausführungsbeispiel. Die Lenkunterstützungsvorrichtung 220 entspricht der Lenkunterstützungsvorrichtung aus Fig. 3 mit Ausnahme dessen, dass die Antriebseinheit 370 zwischen dem Drehmomentsensor 340 und der Getriebeeinheit 360 angeordnet ist. Hierbei ist die Elektronikeinheit 380 ebenfalls bezüglich der Antriebseinheit 370 quer zu der Längsachse L versetzt an der Antriebseinheit 370 angeordnet.

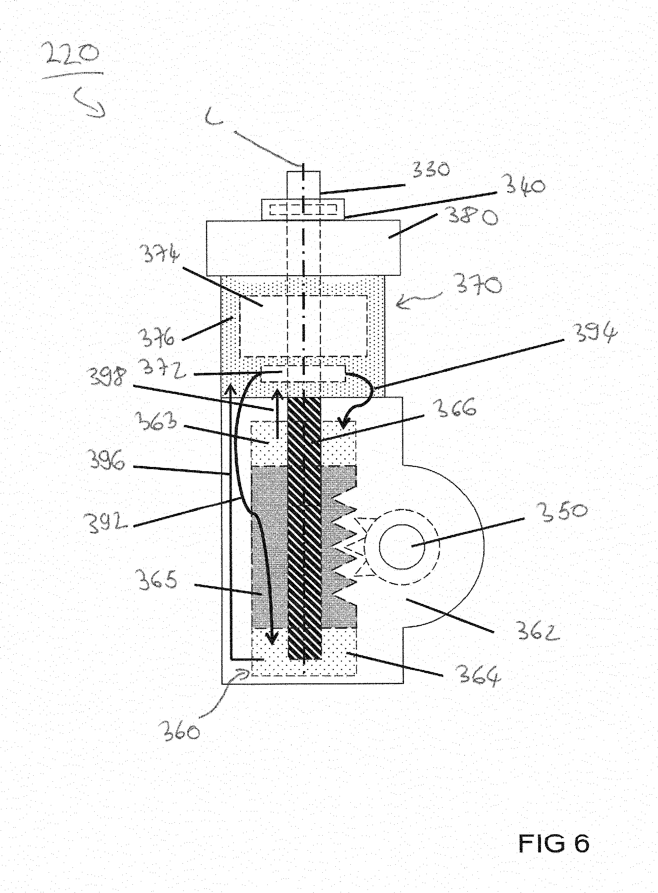

**Fig. 6** zeigt eine schematische Darstellung einer Lenkunterstützungsvorrichtung 220 gemäß einem Ausführungsbeispiel. Die Lenkunterstützungsvorrichtung 220 entspricht der Lenkunterstützungsvorrichtung aus Fig. 5 mit Ausnahme dessen, dass die Antriebseinheit 370 zwischen der Elektronikeinheit 380 und der Getriebeeinheit 360 angeordnet ist bzw. die Elektronikeinheit 380 bezüglich der Längsachse L axial in Verlängerung der Antriebseinheit 370 angeordnet ist.

Unter Bezugnahme auf die Fig. 2 bis Fig. 6 sei angemerkt, dass für die darin beschriebenen Ausführungsbeispiele die nachstehenden Aussagen gelten. Verglichen mit einem üblichen hydraulischen Kugelumlauf-Lenkgetriebe weisen Ausführungsbeispiele anstelle eines hydraulischen Drehschieberventils den Drehmomentsensor 340 auf. Der Drehstab bleibt bestehen. Dieser erzeugt bei einer Lenkbetätigung durch den Fahrer einen Differenzwinkel, welcher durch den Drehmomentsensor 340 erfasst wird und in ein Fahrer-Handmoment umgerechnet wird. Zusätzlich sind gemäß Ausführungsbeispielen die Antriebseinheit 370, welche die bidirektionale Pumpe 372 und den Motor 374 aufweist, und Elektronikeinheit 380 zur Steuerung der Antriebseinheit 370, in dem Gehäuse 222 integriert. Hydrauliköl als Arbeitsmedium wird nun entsprechend dem Fahrerwunsch mittels der Pumpe 372 und unter Verwendung eines geeigneten Steuer-Algorithmus in den jeweiligen Arbeitsraum 363 oder 364 gepresst. Die Wirkungsweise ist vergleichbar mit einem hydraulischen Getriebe.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

### BEZUGSZEICHENLISTE

- 100: Vorderachslenksystem
- 101: Eingangswelle
- 102: Drehschieberventil
- 103: oberer Arbeitsraum
- 104: unterer Arbeitsraum
- 105: Kolben
- 106: Spindel
- 107: Ausgangswelle
- 108: Lenkgehäuse
- 109: Ölreservoir
- 110: Pumpe
- 111: erste Hochdruckleitung
- 112: zweite Hochdruckleitung
- 113: dritte Hochdruckleitung
- 114: erste Niederdruckleitung
- 115: zweite Niederdruckleitung
- 200: Fahrzeug
- 210: Lenksystem
- 212: Lenkrad
- 214: Lenksäule
- 220: Lenkunterstützungsvorrichtung
- 222: Gehäuse
- 330: Eingangswelle
- 340: Drehmomentsensor
- 350: Ausgangswelle
- 360: Getriebeeinheit
- 362: Lenkgehäuse
- 363: erster Arbeitsraum
- 364: zweiter Arbeitsraum
- 365: Kolben
- 366: Spindel
- 370: Antriebseinheit
- 372: Pumpe
- 374: Motor
- 376: Reservoir
- 380: Elektronikeinheit bzw. Steuereinheit
- 392: erste Hochdruckleitung
- 394: zweite Hochdruckleitung
- 396: erste Niederdruckleitung
- 398: zweite Niederdruckleitung
- L: Längsachse

## Patentansprüche

1. Lenkunterstützungsvorrichtung (220) für ein Fahrzeug (200), wobei die Lenkunterstützungsvorrichtung (220) folgende Merkmale aufweist:
- eine Eingangswelle (330) zum Einleiten eines Drehmoments von einer Lenksäule (214) des Fahrzeugs (200) in die Lenkunterstützungsvorrichtung (220);
- einen Drehmomentsensor (340), wobei der Drehmomentsensor (340) ausgebildet ist, um das über die Eingangswelle (330) eingeleitete Drehmoment zu erfassen und ein Sensorsignal bereitzustellen, welches das erfasste Drehmoment repräsentiert;
- eine Ausgangswelle (350) zum Ausleiten des Drehmoments aus der Lenkunterstützungsvorrichtung (220);
- eine Getriebeeinheit (360), wobei die Getriebeeinheit (360) ausgebildet ist, um das Drehmoment von der Eingangswelle (330) mechanisch auf die Ausgangswelle (350) zu übertragen, wobei die Getriebeeinheit (360) innerhalb eines Lenkgehäuses (362) angeordnet ist; und
- eine Antriebseinheit (370), wobei die Antriebseinheit (370) ausgebildet ist, um abhängig von dem Sensorsignal die Getriebeeinheit (360) mit einem hydraulischen Arbeitsmedium zu beaufschlagen, wobei die Antriebseinheit (370) und der Drehmomentsensor (340) in mechanischem Kontakt mit dem Lenkgehäuse (362) angeordnet sind, wobei die Antriebseinheit (370) eine Pumpe (372) zum Fördern des Arbeitsmediums und einen Motor (374) zum Antreiben der Pumpe (372) aufweist, wobei die Antriebseinheit (370) ein Reservoir (376) zum Beinhalten von Arbeitsmedium aufweist , **dadurch gekennzeichnet, dass** zumindest die Pumpe (372) innerhalb des Reservoirs angeordnet ist,
wobei die Eingangswelle (330), der Drehmomentsensor (340), die Getriebeeinheit (360) und die Antriebseinheit (370) entlang einer Längsachse (L) der Lenkunterstützungsvorrichtung (220) aufgereiht angeordnet sind.

2. Lenkunterstützungsvorrichtung (220) gemäß Anspruch 1, **dadurch gekennzeichnet, dass** zumindest die Getriebeeinheit (360) und die Antriebseinheit (370) innerhalb eines gemeinsamen Gehäuses (222; 362) angeordnet sind.

3. Lenkunterstützungsvorrichtung (220) gemäß einem der vorangegangenen Ansprüche, **dadurch gekennzeichnet, dass** die Pumpe (372) eine bidirektionale Pumpe ist, insbesondere eine Innenzahnradpumpe oder eine Sichelpumpe.

4. Lenkunterstützungsvorrichtung (220) gemäß einem der vorangegangenen Ansprüche, **dadurch gekennzeichnet, dass** die Getriebeeinheit (360) zwischen dem Drehmomentsensor (340) und der Antriebseinheit (370) angeordnet ist oder die Antriebseinheit (370) zwischen dem Drehmomentsensor (340) und der Getriebeeinheit (360) angeordnet ist.

5. Lenkunterstützungsvorrichtung (220) gemäß einem der vorangegangenen Ansprüche, **gekennzeichnet durch** eine Elektronikeinheit (380) zum Steuern der Antriebseinheit (370) abhängig von dem Sensorsignal, wobei die Elektronikeinheit (380) in mechanischem Kontakt mit der Antriebseinheit (370) angeordnet ist.

6. Lenkunterstützungsvorrichtung (220) gemäß Anspruch 5, **dadurch gekennzeichnet, dass** die Elektronikeinheit (380) bezüglich der Antriebseinheit (370) quer zu der Längsachse (L) der Lenkunterstützungsvorrichtung (220) versetzt an der Antriebseinheit (370) angeordnet ist oder die Antriebseinheit (370) zwischen der Elektronikeinheit (380) und der Getriebeeinheit (360) angeordnet ist.

7. Lenkunterstützungsvorrichtung (220) gemäß einem der vorangegangenen Ansprüche, **dadurch gekennzeichnet, dass** die Getriebeeinheit (360) einen fluidisch mit der Antriebseinheit (370) verbundenen ersten Arbeitsraum (363) zum Beinhalten von Arbeitsmedium und einen fluidisch mit der Antriebseinheit (370) verbundenen zweiten Arbeitsraum (364) zum Beinhalten von Arbeitsmedium aufweist.

8. Lenkunterstützungsvorrichtung (220) gemäß einem der vorangegangenen Ansprüche, **dadurch gekennzeichnet, dass** die Getriebeeinheit (360) als ein Kugelgewindetrieb ausgeführt ist.

## Claims

1. Steering assistance device (220) for a vehicle (200), wherein the steering assistance device (220) has the following features:
- an input shaft (330) for introducing a torque from a steering column (214) of the vehicle (200) into the steering assistance device (220);
- a torque sensor (340), wherein the torque sensor (340) is configured to detect the torque introduced via the input shaft (330) and to provide a sensor signal which represents the detected torque;
- an output shaft (350) for conducting the torque out of the steering assistance device (220);
- a gear unit (360), wherein the gear unit (360) is configured to mechanically transmit the torque from the input shaft (330) to the output shaft (350), wherein the gear unit (360) is arranged within a steering housing (362); and
- a drive unit (370), wherein the drive unit (370) is configured to charge the gear unit (360) with a hydraulic working medium in a manner dependent on the sensor signal, wherein the drive unit (370) and the torque sensor (340) are arranged so as to be in mechanical contact with the steering housing (362), wherein the drive unit (370) has a pump (372) for conveying the working medium and a motor (374) for driving the pump (372), wherein the drive unit (370) has a reservoir (376) for containing working medium, **characterised in that** at least the pump (372) is arranged within the reservoir,
wherein the input shaft (330), the torque sensor (340), the gear unit (360) and the drive unit (370) are arranged in a row along a longitudinal axis (L) of the steering assistance device (220).

2. Steering assistance device (220) according to claim 1, **characterised in that** at least the gear unit (360) and the drive unit (370) are arranged within a common housing (222; 362).

3. Steering assistance device (220) according to any one of the preceding claims, **characterised in that** the pump (372) is a bidirectional pump, in particular an internal gear pump or a crescent pump.

4. Steering assistance device (220) according to any one of the preceding claims, **characterised in that** the gear unit (360) is arranged between the torque sensor (340) and the drive unit (370) or the drive unit (370) is arranged between the torque sensor (340) and the gear unit (360),

5. Steering assistance device (220) according to any one of the preceding claims, **characterised by** an electronics unit (380) for controlling the drive unit (370) in a manner dependent on the sensor signal, wherein the electronics unit (380) is arranged so as to be in mechanical contact with the drive unit (370).

6. Steering assistance device (220) according to claim 5, **characterised in that** the electronics unit (380) is arranged on the drive unit (370) so as to be offset with respect to the drive unit (370) transversely to the longitudinal axis (L) of the steering assistance device (220), or the drive unit (370) is arranged between the electronics unit (380) and the gear unit (360).

7. Steering assistance device (220) according to any one of the preceding claims, **characterised in that** the gear unit (360) has a first working chamber (363) which is fluidically connected to the drive unit (370) and serves to contain working medium, and a second working chamber (364) which is fluidically connected to the drive unit (370) and serves to contain working medium.

8. Steering assistance device (220) according to any one of the preceding claims, **characterised in that** the gear unit (360) is designed as a ball screw drive.

## Revendications

1. Dispositif de direction assistée (220) pour un véhicule (200), dans lequel le dispositif de direction assistée (220) présente les caractéristiques suivantes :
- un arbre d'entrée (330) pour l'introduction d'un couple d'une colonne de direction (214) du véhicule (200) dans le dispositif de direction assistée (220) ;
- un capteur de couple (340), dans lequel le capteur de couple (340) est réalisé afin de détecter le couple introduit par le biais de l'arbre d'entrée (330) et de fournir un signal de capteur qui représente le couple détecté ;
- un arbre de sortie (350) pour l'évacuation du couple du dispositif de direction assistée (220) ;
- une unité de transmission (360), dans lequel l'unité de transmission (360) est réalisée afin de transmettre le couple de l'arbre d'entrée (330) mécaniquement à l'arbre de sortie (350), dans lequel l'unité de transmission (360) est agencée à l'intérieur d'un boîtier de direction (362) ; et
- une unité d'entraînement (370), dans lequel l'unité d'entraînement (370) est réalisée afin d'alimenter l'unité de transmission (360) avec un fluide de travail hydraulique en fonction du signal de capteur, dans lequel l'unité d'entraînement (370) et le capteur de couple (340) sont agencés en contact mécanique avec le boîtier de direction (362), dans lequel l'unité d'entraînement (370) présente une pompe (372) pour le transport du fluide de travail et un moteur (374) pour l'entraînement de la pompe (372), dans lequel l'unité d'entraînement (370) présente un réservoir (376) pour contenir du fluide de travail, **caractérisé en ce qu'**au moins la pompe (372) est agencée à l'intérieur du réservoir,
dans lequel l'arbre d'entrée (330), le capteur de couple (340), l'unité de transmission (360) et l'unité d'entraînement (370) sont agencés de manière alignée le long d'un axe longitudinal (L) du dispositif de direction assistée (220).

2. Dispositif de direction assistée (220) selon la revendication 1, **caractérisé en ce qu'**au moins l'unité de transmission (360) et l'unité d'entraînement (370) sont agencées à l'intérieur d'un boîtier commun (222 ; 362).

3. Dispositif de direction assistée (220) selon l'une quelconque des revendications précédentes, **caractérisé en ce que** la pompe (372) est une pompe bidirectionnelle, en particulier une pompe à roue dentée interne ou une pompe en croissant.

4. Dispositif de direction assistée (220) selon l'une quelconque des revendications précédentes, **caractérisé en ce que** l'unité de transmission (360) est agencée entre le capteur de couple (340) et l'unité d'entraînement (370) ou l'unité d'entraînement (370) est agencée entre le capteur de couple (340) et l'unité de transmission (360).

5. Dispositif de direction assistée (220) selon l'une quelconque des revendications précédentes, **caractérisé par** une unité électronique (380) pour la commande de l'unité d'entraînement (370) en fonction du signal de capteur, dans lequel l'unité électronique (380) est agencée en contact mécanique avec l'unité d'entraînement (370).

6. Dispositif de direction assistée (220) selon la revendication 5, **caractérisé en ce que** l'unité électronique (380) est agencée au niveau de l'unité d'entraînement (370) en déport par rapport à l'unité d'entraînement (370) transversalement à l'axe longitudinal (L) du dispositif de direction assistée (220) ou l'unité d'entraînement (370) est agencée entre l'unité électronique (380) et l'unité de transmission (360).

7. Dispositif de direction assistée (220) selon l'une quelconque des revendications précédentes, **caractérisé en ce que** l'unité de transmission (360) présente un premier espace de travail (363) relié de manière fluidique à l'unité d'entraînement (370) pour contenir du fluide de travail et un second espace de travail (364) relié de manière fluidique à l'unité d'entraînement (370) pour contenir du fluide de travail.

8. Dispositif de direction assistée (220) selon l'une quelconque des revendications précédentes, **caractérisé en ce que** l'unité de transmission (360) est réalisée comme une vis d'entraînement à billes.
